# FASCICULE DE BREVET EUROPEEN

(11) **EP 3 782 797 B1**
(45) Date de publication et mention de la délivrance du brevet: **07.02.2024**
(21) Numéro de dépôt: 19192187.3
(22) Date de dépôt: 17.08.2019
(51) Int. Cl.: B29C 64/118, B33Y 40/10, B33Y 30/00, B29C 64/321, B29C 64/314, B29C 64/295, B29C 64/209, B29C 48/02, B29C 48/05, B29C 48/92, B29K 705/00

(54) **DISPOSITIF D'IMPRESSION 3D MUNI D'UNE VIS SANS FIN ENTRAINÉE PAR UN MOTEUR ET DE MOYENS DE REFROIDISSEMENT DU MOTEUR**
3D-DRUCKVORRICHTUNG MIT EINER MOTORBETRIEBENEN SCHNECKE UND MOTORKÜHLMITTELN
3D PRINTING DEVICE PROVIDED WITH A WORM DRIVEN BY A MOTOR AND MEANS FOR COOLING THE MOTOR

(43) Date de publication de la demande: 24.02.2021
(73) Titulaire: EPEIRE3D, 59320 Haubourdin (FR)
(72) Inventeur: PLUCHARD, Bruno, 59930 La Chapelle d Armentières (FR)
(74) Mandataire: RVDB

(56) Documents cités:
- WO-A1-2017/202398
- WO-A1-2018/203768
- DE-A1-102018 132 317
- FR-A1- 3 063 451
- US-A1- 2015 321 419

## Description

### Domaine technique

La présente invention concerne un dispositif d'impression, du type imprimante en trois dimensions (imprimante 3D), pour une fabrication additive d'une pièce imprimée par dépose d'un matériau polymère en fusion obtenu à partir de matériaux polymères fusibles sous forme de granulés, un tel dispositif d'impression étant adapté sur une machine d'impression qui comprend également un dispositif de déplacement à trois axes X, Y, Z voire à plus de trois axes.

### Etat de la technique

Généralement, les dispositifs d'impression qui permettent une fabrication additive d'une pièce imprimée utilisent des matériaux polymères sous forme de résines, de poudres ou de filaments. Ces matériaux sont coûteux et peu résistants, leurs propriétés techniques (physique, mécanique, choc, dureté, thermique, électrique, inflammabilité ...) étant en outre méconnues. Lorsque ces matériaux sont sous forme de filament, ceux-ci ont déjà subi une dégradation de leurs principales caractéristiques au contact de la chaleur, du fait de leur première transformation sous forme de filament, lequel doit être de nouveau chauffé par le dispositif d'impression pour être déposé et imprimer la pièce. De tels dispositifs d'impression ne répondent pas ou peu aux besoins des industriels qui ont des applications spécifiques (automobile, aéronautique, aérospatiale, armement).

D'autres dispositifs d'impression utilisent des matériaux polymères fusibles sous forme de granulés, de tels dispositifs d'impression permettant de chauffer une seule fois le matériau sous forme de granulés au moment de sa dépose en sorte de préserver l'ensemble des caractéristiques techniques du matériau et de réduire considérablement le coût de la matière première et, ainsi, le coût de la fabrication additive d'une pièce imprimée.

Il est connu les antériorités suivantes qui concernent des dispositifs d'impression utilisant des matériaux polymères fusibles sous forme de granulés : US2015321419A1 ; CN107856295A ; WO2017038984A1. Selon ces trois antériorités, les dispositifs d'impression comprennent des moyens de chauffe des matériaux polymères sous forme de granulés, des moyens d'alimentation du matériau en fusion jusqu'à une tête d'impression comprenant une buse d'impression, lesdits moyens d'alimentation du matériau en fusion comprenant une vis sans fin entraînée par un moteur. L'axe principale de la vis sans fin est parallèle à la surface de référence de la pièce à imprimée, cette surface de référence étant généralement située dans un plan plus ou moins horizontal. Cette position de l'axe de la vis sans fin, sensiblement horizontal plutôt que sensiblement vertical, permet d'éviter un tassement de la matière en fusion au niveau de la tête d'impression, ce qui pourrait engendrer une mauvaise extraction de la matière en fusion et son refroidissement au niveau de ladite tête d'impression. Ainsi, cette disposition à l'horizontal de la vis sans fin permet au matériau polymère en fusion de sortir de la buse d'impression de façon régulière et homogène.

Selon les antériorités CN107856295A et WO2017038984A1, l'arbre du moteur et l'arbre de la vis sans fin sont en prise directe, ce qui engendre une surchauffe du moteur et peut conduire à sa dégradation prématurée, notamment au niveau des aimants permanents dudit moteur. En effet, la température élevée due au chauffage permettant de faire fondre les matériaux granulés et de maintenir la matière en fusion, est transférée par conduction thermique au moteur dont l'arbre de rotation est en contact direct avec l'arbre de la vis sans fin.

Selon l'antériorité US2015321419A1, l'arbre de rotation du moteur est accouplé à l'arbre de la vis sans fin via un moyen d'entraînement, les deux arbres étant différents et distants l'un de l'autre. Ces moyens d'entraînement sont du type engrenage ou courroie de transmission. Cela permet de réduire les échauffements du moteur, mais demeure insuffisant pour empêcher une dégradation à terme des aimants permanents dudit moteur à cause de la surchauffe engendrée par la conduction thermique de l'arbre de la vis sans fin vers l'arbre du moteur, par l'intermédiaire desdits moyens d'entraînement.

### Résumé de l'invention

La présente invention a pour objectif de pallier le problème de dégradation prématurée du moteur due à une surchauffe de celui-ci causée par la montée en température de l'arbre de la vis sans fin durant le fonctionnement des moyens de chauffe qui permettent de faire fondre les granulés fusibles et de maintenir le matériau en fusion.

L'invention concerne un dispositif suivant la revendication 1.

A cet effet, l'invention concerne un dispositif d'impression de type imprimante 3D, pour une fabrication additive à partir de matériaux de type polymères sous forme de granulés fusibles. Le dispositif d'impression comprend des moyens de chauffe des granulés pour l'obtention d'un matériau en fusion et des moyens d'alimentation du matériau en fusion jusqu'à une tête d'impression comprenant à sa sortie une buse d'impression. Les moyens d'alimentation comprennent une vis sans fin entraînée par un moteur, l'arbre de la vis sans fin et l'arbre du moteur étant différents et distants l'un de l'autre. En outre, un mécanisme d'entraînement est agencé entre l'arbre du moteur et l'arbre de la vis sans fin pour que la rotation de l'arbre du moteur entraîne celle de l'arbre de la vis sans fin par l'intermédiaire dudit mécanisme d'entraînement. La séparation de l'arbre de la vis sans fin et de l'arbre du moteur, en contact indirect par l'intermédiaire du mécanisme d'entraînement, contribue par elle-même à réduire la conduction thermique de l'arbre de la vis sans fin vers l'arbre du moteur. Pour atténuer encore, voire supprimer complètement les effets de cette conduction thermique, le dispositif d'impression comprend des moyens de refroidissement agencés au moins au niveau d'une des parties d'extrémité du mécanisme d'entraînement accouplées respectivement avec l'arbre du moteur et avec l'arbre de la vis sans fin.

Les moyens de refroidissement sont agencés au moins au niveau des deux parties d'extrémité du mécanisme d'entraînement accouplées respectivement avec l'arbre du moteur et avec l'arbre de la vis sans fin.

D'autres réalisations des moyens de refroidissement restent envisageables, par exemple des moyens de refroidissement agencés sur toute la longueur du mécanisme d'entraînement de manière à refroidir les deux parties d'extrémité du mécanisme d'entraînement accouplées respectivement aux arbres du moteur et de la vis sans fin, mais aussi l'ensemble dudit mécanisme d'entraînement.

Selon une réalisation du dispositif d'impression, le mécanisme d'entraînement comprend une courroie ou une chaîne qui est accouplée à une première partie d'extrémité avec l'arbre du moteur et à une seconde partie d'extrémité avec l'arbre de la vis sans fin, ladite courroie ou ladite chaîne isolant thermiquement l'arbre du moteur vis-à-vis de l'arbre de la vis sans fin. La conduction thermique est en effet atténuée plus efficacement au moyen d'une courroie ou d'une chaîne qu'au moyen d'un engrenage de type pignons/roues dentées. De préférence, le mécanisme d'entraînement sera une courroie conçue dans un matériau présentant de bonnes propriétés d'isolation thermique, par exemple une courroie en Néoprène câblé en fibre de verre. Cette courroie pourrait toutefois être remplacée par une chaîne, de préférence en acier, une telle chaîne présentant une bonne conduction thermique et une grande surface de contact permettant un échange de chaleur plus important avec le milieu extérieur, et donc un refroidissement plus important évitant de transférer la température de l'arbre de la vis sans fin vers l'arbre du moteur.

Les moyens de refroidissement sont du type ventilateur. Ainsi, un premier ventilateur est agencé au niveau de la partie d'extrémité du mécanisme d'entraînement accouplée avec l'arbre du moteur et/ou, selon le mode de réalisation des moyens de refroidissement mis en oeuvre, un second ventilateur est agencé au niveau de la partie d'extrémité du mécanisme d'entraînement accouplée avec l'arbre de la vis sans fin.

Selon le dispositif d'impression objet de l'invention, l'arbre de la vis sans fin est parallèle à la surface de référence de la pièce à imprimer, ladite surface étant horizontale. Le terme horizontal couvre également une position légèrement inclinée par rapport à l'horizontale. Comme expliqué précédemment, cette position de l'axe de la vis sans fin, horizontal plutôt que vertical, permet d'éviter un tassement de la matière en fusion au niveau de la tête d'impression, ce qui pourrait engendrer une mauvaise extraction de la matière en fusion et son refroidissement au niveau de ladite tête d'impression avant sa sortie par la buse d'impression.

Selon une réalisation du dispositif d'impression, l'arbre du moteur et l'arbre de la vis sans fin sont parallèles entre eux. Cela permet de faciliter l'effort de transmission de l'arbre du moteur vers l'arbre de la vis sans fin au moyen du mécanisme d'entraînement et aussi de réduire l'encombrement du dispositif d'impression. D'autres agencements du moteur, de la vis sans fin et du mécanisme d'entraînement restent envisageables dans le cadre de l'invention.

Selon une réalisation du dispositif d'impression, la tête d'impression comprend un profil à angle droit arrondi permettant d'annuler le mouvement hélicoïdal du matériau en fusion engendré par la rotation de la vis sans fin. Cela permet avantageusement à la buse d'impression d'extruder le matériau polymère en fusion de façon régulière, homogène et perpendiculairement à la surface de référence de la pièce à imprimer.

Selon une réalisation du dispositif d'impression, les moyens de chauffe comprennent des éléments résistifs agencés sur un cylindre de chauffe dans lequel passe la vis sans fin et sur la tête d'impression. Cela permet de maintenir convenablement le matériau en fusion jusqu'à sa sortie de la buse d'impression.

Les caractéristiques décrites ci-dessus du dispositif d'impression selon l'invention seront de préférence mises en oeuvre en combinaison. Des variantes de dispositifs d'impression avec certaines seulement de ces caractéristiques pouvant éventuellement être envisagées, dans le cadre de l'invention.

L'invention concerne également une machine d'impression qui comprend un dispositif d'impression présentant l'une et/ou l'autre des caractéristiques précitées, une table munie de la surface de référence de la pièce à imprimer et un dispositif de déplacement à trois axes, voire à plus de trois axes.

### Brève description des figures

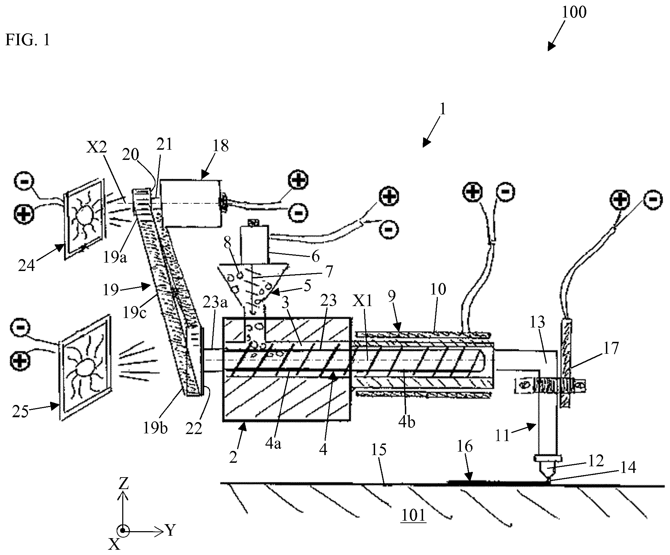

Les caractéristiques et avantages de l'invention apparaîtront à la lecture de la description suivante s'appuyant sur une unique figure 1 schématisant un mode de réalisation du dispositif d'impression selon l'invention.

### Description détaillée

Au regard de la figure 1, le dispositif d'impression 1 comprend un corps 2 qui présente en son intérieur un conduit 3 permettant le passage d'une vis sans fin 4. Ce conduit 3 reçoit une première partie 4a de la vis sans fin 4, disposée en amont, l'amont et l'aval étant définis par le sens d'avancement de la matière sous forme de granulés ou en fusion le long de la vis sans fin 4, comme cela sera décrit ci-après. La vis sans fin 4 est du type vis d'extrusion. Sur la partie supérieure du corps 2 est montée une trémie 5 qui permet de stocker des matériaux polymères fusibles sous forme de granulés et qui communique avec le conduit 3 à l'intérieur dudit corps 2. Cette trémie 5 comprend un moteur 6 qui entraine en rotation un axe 7 type vis hélicoïdale de sorte à éviter de créer un tassement du matériau polymère sous forme de granulés 8 stockés dans la trémie 5 par le phénomène de gravité et, ainsi, laisser les granulés 8 descendre convenablement et alimenter en continu le conduit 3 du corps 2 lors de la rotation de la vis sans fin 4. Le corps 2 est conçu dans un matériau assurant une faible conduction thermique, par exemple un acier très fortement allier de type inconel, Monel ou Uranus ou un acier de type 304\316, voire d'autres aciers, afin d'éviter de faire fondre les granulés 8 au niveau de la trémie 5 et dans la première partie 4a de la vis sans fin 4.

Au regard de la figure 1, le dispositif d'impression 1 comprend un cylindre de chauffe 9 qui est disposé dans le prolongement du corps 2 et dans lequel passe une seconde partie 4b de la vis sans fin 4, disposée en aval. Ce cylindre de chauffe 9 comprend un premier élément résistif 10 qui permet de chauffer les granulés 8 disposés dans la seconde partie 4b de la vis sans fin 4, afin de faire fondre ces granulés 8. Le cylindre de chauffe 9 communique avec une tête d'impression 11 qui est disposée dans le prolongement dudit cylindre de chauffe 9. La tête d'impression 11 comprend à son extrémité aval une buse 12 par laquelle sort le matériau fondu. Cette tête d'impression 11 dispose d'un profil à angle droit arrondi 13 dont le but est d'annuler le mouvement hélicoïdal du matériau fondu créé par la rotation de la vis sans fin 4, ce qui permet de faire sortir par la buse 12 un filament 14 de matériau fondu de façon régulière, homogène et perpendiculairement à la surface 15 de référence de la pièce 16. La tête d'impression 11 comprend un second élément résistif 17 qui permet de maintenir le matériau fondu jusqu'à sa sortie de la buse 12. La rotation de la vis sans fin 4 permet donc d'alimenter les granulés 8 depuis la trémie 5, ces granulés 8 avançant le long de la vis sans fin 4 en demeurant tels quels dans le conduit 3 à l'intérieur du corps 2, puis fondant sous l'action du premier élément résistif 10 du cylindre de chauffe 9 dans la seconde partie 4b de ladite vis sans fin 4. Le matériau fondu continu à avancer dans la tête d'impression 11 sous la poussée dudit matériau fondu exercée par ladite vis sans fin 4, le second élément résistif 17 maintenant ledit matériau en fusion jusqu'à ce qu'il sorte de la buse 12 sous forme d'un filament 14, sous l'action de ladite poussée.

Au regard de la figure 1, un moteur 18 permet d'entraîner en rotation la vis sans fin 4 par l'intermédiaire d'une courroie 19 de transmission dont une première partie d'extrémité 19a est en prise avec un pignon 20 agencé à l'extrémité de l'arbre 21 du moteur 18 et une seconde partie d'extrémité 19b est en prise avec une roue 22 agencée à l'extrémité amont 23a de l'arbre 23 de la vis sans fin 4. Ainsi, l'arbre 21 du moteur 18 et l'arbre 23 de la vis sans fin 4 sont distants l'un de l'autre et distincts. De préférence, la courroie 19, le pignon 20 et la roue 22 sont crantés pour que l'entraînement de l'arbre 23 de la vis sans fin 4 sous la rotation de l'arbre 21 du moteur 18 s'effectue sans glissement de la courroie 19. Cette courroie 19 pourrait aussi être remplacée par une chaîne (non illustrée). L'utilisation de cette courroie 19 permet en partie d'isoler thermiquement l'arbre 21 du moteur 18 vis-à-vis de l'arbre 23 de la vis sans fin 4, ce dernier chauffant fortement à cause du premier élément résistif 10 qui fait fondre les granulés 8 emportés par la vis sans fin 4. Cette isolation thermique de l'arbre 21 du moteur 18 permet d'éviter une dégradation prématurée dudit moteur 18. De préférence, la courroie 19 est réalisée dans une matière assurant une faible conduction thermique, par exemple une matière Néoprène câblé en fibre de verre. Cette courroie 19 pourrait toutefois être remplacée par chaîne avec une forte conduction thermique mais avec un pouvoir d'échange thermique très élevé de sorte que ladite chaîne puisse refroidir rapidement au contact du milieu ambiant.

Cette isolation thermique de l'arbre 21 du moteur 18 obtenue en déportant ledit arbre 21 de l'arbre 23 de la vis sans fin 4 et en utilisant une courroie 19 pour transmettre la rotation de l'arbre 21 du moteur 18 à l'arbre 23 de la vis sans fin 4, ne suffit pas à elle seule à éviter une montée en température du moteur 18 par conduction thermique engendrée par le premier élément résistif 10 et aussi (de manière beaucoup moins importante) par le second élément résistif 17. Afin d'obtenir une parfaite isolation thermique de l'arbre 21 du moteur 18, un premier ventilateur 24 est monté au niveau de la première partie d'extrémité 19a de la courroie 19 de sorte à refroidir ladite première partie d'extrémité 19a et l'extrémité de l'arbre 21 du moteur 18. De même, un second ventilateur 25 est monté au niveau de la seconde partie d'extrémité 19b de la courroie 19 de sorte à refroidir ladite seconde extrémité 19b et l'extrémité amont 23a de l'arbre 23 de la vis sans fin 4, ce qui évite de propager la chaleur le long de la courroie 19 en direction de sa première partie d'extrémité 19a. Selon la conduction thermique engendrée par le biais de la courroie 19, un seul des deux ventilateurs 24, 25 pourrait être prévu ; au contraire, un troisième ventilateur (non illustré) pourrait être prévu pour refroidir aussi la partie centrale 19c de la courroie 19. Cela est également valable avec d'autres mécanismes d'entraînement envisageables (chaîne ou engrenage pignons/roues dentées, notamment) en remplacement de la courroie 19.

Au regard de la figure 1, l'axe X1 de l'arbre 23 de la vis sans fin 4 est positionné parallèlement à la surface 15 de référence de la pièce 16. Cette surface 15 est disposée dans un plan qui, de préférence, est horizontal, de légères inclinaisons étant toutefois envisageables, par exemple une inclinaison d'un angle compris entre plus ou moins dix degrés (-10° < angle < + 10°), selon les défauts de planéité du sol recevant la machine d'impression comportant le dispositif d'impression 1 selon l'invention. Cette position de l'axe X1, horizontal plutôt que vertical, permet d'éviter un tassement de la matière en fusion au niveau de la tête d'impression 11.

Au regard de la figure 1, l'axe X2 de l'arbre 21 du moteur 18 est positionné parallèlement à l'axe X1 de l'arbre 23 de la vis sans fin 4, ce qui facilite la transmission de l'effort mécanique au moyen de la courroie 19. Cette disposition en parallèle des deux axes X1, X2 favorise également un gain d'espace.

Le moteur 6 de la trémie 5, le moteur 18 entraînant la vis sans fin 4 par le biais de la courroie 19, les deux ventilateurs 24, 25 et les premier et second éléments résistifs 10, 17 sont tous alimentés électriquement, comme cela est schématisé sur la figure 1 au moyen des bornes positive et négative (+ et -).

L'invention concerne également une machine d'impression 100 qui comprend un dispositif d'impression 1 tel que décrit précédemment, voire d'autres variantes restant sous le couvert de l'invention. Cette machine d'impression 100 comprend une table 101 disposant de la surface 15 de référence de la pièce 16. La machine d'impression 100 comprend également un dispositif de déplacement dans un repère trois axes X, Y, Z, plus de trois axes étant envisageables (dispositif de déplacement à cinq axes). Ce dispositif de déplacement peut être conçu pour déplacer le dispositif d'impression 1 par rapport à la table 101 ou, au contraire, pour déplacer la table 101 par rapport au dispositif d'impression 1. L'Homme du métier pourra s'inspirer des machines à commande numérique utilisant déjà de tels dispositifs de déplacement.

## Revendications

1. Dispositif d'impression (1) de type imprimante 3D pour une fabrication additive à partir de matériaux de type polymères sous forme de granulés (8) fusibles, le dispositif d'impression comprenant des moyens de chauffe des granulés (8) pour l'obtention d'un matériau en fusion, des moyens d'alimentation du matériau en fusion jusqu'à une tête d'impression (11) comprenant à sa sortie une buse d'impression (12), les moyens d'alimentation comprenant une vis sans fin (4) entraînée par un moteur (18), l'arbre (23) de la vis sans fin et l'arbre (21) du moteur étant différents et distants l'un de l'autre, un mécanisme d'entraînement agencé entre l'arbre du moteur et l'arbre de la vis sans fin pour que la rotation de l'arbre du moteur entraîne celle de l'arbre de la vis sans fin, **caractérisée en ce que** ledit dispositif d'impression (1) comprend un premier ventilateur (24) agencé au niveau de la partie d'extrémité (19a) du mécanisme d'entraînement accouplée avec l'arbre (21) du moteur (18) et un second ventilateur (25) agencé au niveau de la partie d'extrémité (19b) du mécanisme d'entraînement accouplée avec l'arbre (23) de la vis sans fin (4).

2. Dispositif d'impression (1) selon la revendication 1, dans lequel le mécanisme d'entraînement comprend une courroie (19) ou une chaîne qui est accouplée à sa première partie d'extrémité (19a) avec l'arbre (21) du moteur (18) et à sa seconde partie d'extrémité (19b) avec l'arbre (23) de la vis sans fin (4), ladite courroie (19) ou ladite chaîne isolant thermiquement l'arbre du moteur vis-à-vis de l'arbre de la vis sans fin.

3. Dispositif d'impression (1) selon l'une quelconque des revendications 1 ou 2, dans lequel l'arbre (23) de la vis sans fin (4) est parallèle à la surface (15) de référence de la pièce (16) à imprimer, ladite surface (15) étant horizontale.

4. Dispositif d'impression (1) selon l'une quelconque des revendications 1 à 3, dans lequel l'arbre (21) du moteur (18) et l'arbre (23) de la vis sans fin (4) sont parallèles entre eux.

5. Dispositif d'impression (1) selon l'une quelconque des revendications 1 à 4, dans lequel la tête d'impression (11) comprend un profil à angle droit arrondi (13) permettant d'annuler le mouvement hélicoïdal du matériau fondu engendré par la rotation de la vis sans fin (4).

6. Dispositif d'impression (1) selon l'une quelconque des revendications 1 à 5, dans lequel les moyens de chauffe comprennent des éléments résistifs (10, 17) agencés sur un cylindre de chauffe (9) dans lequel passe la vis sans fin (4) et sur la tête d'impression (11).

7. Machine d'impression (100) qui comprend un dispositif d'impression (1) présentant les caractéristiques objets de l'une quelconque des revendications 1 à 6, une table munie d'une surface (15) de référence de la pièce (16) à imprimer et un dispositif de déplacement à au moins trois axes (X, Y, Z).

## Patentansprüche

1. Druckvorrichtung (1) vom Typ 3D-Drucker für eine additive Herstellung aus Materialien vom Typ Polymere in Form schmelzbarer Granulate (8), wobei die Druckvorrichtung Mittel zum Erwärmen der Granulate (8) umfasst, um ein geschmolzenes Material zu erhalten, Mittel zur Versorgung mit geschmolzenem Materials eines Druckkopfs (11), der an seinem Ausgang eine Druckdüse (12) umfasst, wobei die Versorgungsmittel eine Schnecke (4) umfassen, die von einem Motor (18) angetrieben wird, wobei die Welle (23) der Schnecke und die Welle (21) des Motors unterschiedlich und voneinander beabstandet sind, einen Antriebsmechanismus, der zwischen der Welle des Motors und der Welle der Schnecke eingerichtet ist, damit die Rotation der Welle des Motors die der Welle der Schnecke antreibt, **dadurch gekennzeichnet, dass** die Druckvorrichtung (1) einen ersten Lüfter (24) umfasst, der im Bereich des Endabschnitts (19a) des Antriebsmechanismus eingerichtet ist, der mit der Welle (21) des Motors (18) gekoppelt ist, und einen zweiten Lüfter (25), der im Bereich des Endabschnitts (19b) des Antriebsmechanismus mit der Welle (23) der Schnecke (4) gekoppelt ist.

2. Druckvorrichtung (1) nach Anspruch 1, wobei der Antriebsmechanismus einen Riemen (19) oder eine Kette umfasst, der/die an seinem/ihrem ersten Endabschnitt (19a) mit der Welle (21) des Motors (18) und an seinem/ihrem zweiten Endabschnitt (19b) mit der Welle (23) der Schnecke (4) gekoppelt ist, wobei der Riemen (19) oder die Kette die Welle des Motors gegenüber der Welle der Schnecke thermisch isolieren.

3. Druckvorrichtung (1) nach einem der Ansprüche 1 oder 2, wobei die Welle (23) der Schnecke (4) zur Referenzoberfläche (15) des zu druckenden Teils (16) parallel ist, wobei die Oberfläche (15) horizontal ist.

4. Druckvorrichtung (1) nach einem der Ansprüche 1 bis 3, wobei die Welle (21) des Motors (18) und die Welle (23) der Schnecke (4) parallel zueinander sind.

5. Druckvorrichtung (1) nach einem der Ansprüche 1 bis 4, wobei der Druckkopf (11) ein Profil mit abgerundetem rechtem Winkel (13) umfasst, wodurch die schraubenförmige Bewegung des geschmolzenen Materials, die durch die Rotation der Schnecke (4) erzeugt wird, annullierbar ist.

6. Druckvorrichtung (1) nach einem der Ansprüche 1 bis 5, wobei die Mittel zum Erwärmen resistive Elemente (10, 17) umfasst, die auf einem Heizzylinder (9) eingerichtet sind, in dem die Schnecke (4) verläuft, und auf dem Druckkopf (11).

7. Druckmaschine (100), die eine Druckvorrichtung (1) umfasst, die die charakteristischen Objekte eines der Ansprüche 1 bis 6, einen Tisch, der mit einer Referenzoberfläche (15) des zu druckenden Teils (16) und eine Verlagerungsvorrichtung in mindestens drei Achsen (X, Y, Z) aufweist.

## Claims

1. A printing device (1) of the 3D printer type for additive manufacturing from materials of the polymer type in the form of fusible granules (8), the printing device comprising means for heating the granules (8) to obtain a molten material, means for supplying the molten material up to a print head (11) comprising at its outlet a print nozzle (12), the supply means comprising a worm screw (4) driven by a motor (18), the shaft (23) of the worm screw and the shaft (21) of the motor being different and spaced apart from each other, a drive mechanism arranged between the shaft of the motor and the shaft of the worm screw so that the rotation of the shaft of the motor drives that of the shaft of the worm screw, **characterised in that** said printing device (1) comprises a first fan (24) arranged at the end portion (19a) of the drive mechanism coupled to the shaft (21) of the motor (18) and a second fan (25) arranged at the end portion (19b) of the drive mechanism coupled to the shaft (23) of the worm screw (4).

2. The printing device (1) according to claim 1, wherein the drive mechanism comprises a belt (19) or chain which is coupled at its first end portion (19a) with the shaft (21) of the motor (18) and at its second end portion (19b) with the shaft (23) of the worm screw (4), said belt (19) or said chain thermally insulating the shaft of the motor with respect to the shaft of the worm screw.

3. The printing device (1) according to any one of claims 1 or 2, wherein the shaft (23) of the worm screw (4) is parallel to the reference surface (15) of the part (16) to be printed, said surface (15) being horizontal.

4. The printing device (1) according to any one of claims 1 to 3, wherein the shaft (21) of the motor (18) and the shaft (23) of the worm screw (4) are parallel to each other.

5. The printing device (1) according to any one of claims 1 to 4, wherein the print head (11) comprises a rounded right-angled profile (13) allowing cancelling the helical movement of the molten material generated by the rotation of the worm screw (4).

6. The printing device (1) according to any one of claims 1 to 5, wherein the heating means comprise resistive elements (10, 17) arranged over a heating cylinder (9) through which passes the worm screw (4) and over the print head (11).

7. A printing machine (100) which comprises a printing device (1) having the features which are the subject matter of any one of claims 1 to 6, a table provided with a reference surface (15) of the part (16) to be printed and a moving device with at least three axes (X, Y, Z).
